# EUROPEAN PATENT APPLICATION

(11) **EP 4 825 624 A1**
(43) Date of publication of application: **21.10.2026**
(21) Application number: 26175540.9
(22) Date of filing: 20.07.2022
(51) Int. Cl.: B60K 1/04, H01M 10/0587, H01M 50/107, H01M 50/533, H01M 50/538, H01M 50/548, H01M 50/586, H01M 50/593, B60L 50/64, H01M 50/531

(54) **ELECTRODE ASSEMBLY, CYLINDRICAL BATTERY CELL, AND BATTERY PACK AND VEHICLE INCLUDING THE SAME**

(30) Priority: 05.08.2021 KR 20210103388; 15.10.2021 KR 20210137200; 18.07.2022 KR 20220088574
(62) Document number(s) of the earlier application(s) in accordance with Art. 76 EPC: 22853312.1 / 4 329 026
(71) Applicant: LG Energy Solution, Ltd., Seoul 07335 (KR)
(72) Inventor: LEE, Kwan-Hee, 34122 Daejeon (KR); KIM, Sue-Jin, 34122 Daejeon (KR); LEE, Yun-Ju, 34122 Daejeon (KR); RYU, Duk-Hyun, 34122 Daejeon (KR)
(74) Representative: Goddar, Heinz J.

(57) **Abstract**

An electrode assembly according to an embodiment of the present disclosure is of a jelly-roll type having a structure in which a first electrode and a second electrode each having a sheet shape and a separation film interposed between the first electrode and the second electrode are wound in one direction. Each of the first electrode and the second electrode includes an uncoated portion not coated with an active material layer, the uncoated portion being formed on a longer edge end; and a coated portion coated with an active material layer, the coated portion being formed on a region excluding the uncoated portion. The first electrode includes at least one insulation layer that covers at least a portion of the uncoated portion and at least a portion of the coated portion at the same time.

## Description

### TECHNICAL FIELD

The present disclosure relates to an electrode assembly, a cylindrical secondary battery, and a battery pack and a vehicle including the same.

The present application claims priority to Korean Patent Application No. 10-2021-0103388 filed on August 5, 2021, Korean Patent Application No. 10-2021-0137200 filed on October 15, 2021 and Korean Patent Application No. 10-2022-0088574 filed on July 18, 2022 in the Republic of Korea, the disclosures of which are incorporated herein by reference.

### BACKGROUND ART

In cylindrical secondary batteries, for higher current collection efficiency, a battery can may use a jelly roll type electrode assembly having a shape in which a positive electrode tab and a negative electrode tab each extend on an upper side and a lower side, respectively, in a height direction of the battery can.

In such a structure described above, a movement of a positive electrode or a negative electrode, such as serpentine moving, may occur. In this case, there is a possibility that an end of the positive electrode or the negative electrode is moved toward an end of a separation film. Accordingly, when the positive electrode or the negative electrode is positioned at up to the end of the separation film or protrudes further outward than the end of the separation film due to occurrence of the movement such as serpentine moving of the positive electrode or the negative electrode, electrical contact between the positive electrode and the negative electrode occurs. Alternatively, when the separation film is damaged for some reasons, electrical contact between the positive electrode and the negative electrode may occur. Consequently, a short circuit may occur inside a battery. A short circuit occurring inside the battery may cause heat generation or explosion of the battery. Accordingly, it is necessary to provide an insulation member for effectively preventing electrical contact between the positive electrode and the negative electrode.

Therefore, a method capable of providing a cylindrical battery cell having a low internal resistance and a low risk of short circuit, and a battery pack and a vehicle including the cylindrical battery cell is required.

### DISCLOSURE

### Technical Problem

The present disclosure is designed to solve the problems of the related art, and therefore is directed to reducing the internal resistance of a cylindrical secondary battery and effectively preventing internal short circuit at the same time.

The technical problems to be solved in the present disclosure are not limited to the above, and other problems that are not mentioned could be clearly understood by one of ordinary skill in the art from the description of the present disclosure below.

### TECHNICAL SOLUTION

In one aspect of the present disclosure, there is provided an electrode assembly of a jelly-roll type having a structure in which a first electrode and a second electrode each having a sheet shape and a separation film interposed between the first electrode and the second electrode are wound in one direction, wherein each of the first electrode and the second electrode includes an uncoated portion not coated with an active material layer and formed on a longer edge end; and a coated portion coated with an active material layer and formed on a region excluding the uncoated portion.

The first electrode includes at least one insulation layer that covers at least a portion of the uncoated portion and at least a portion of the coated portion at the same time.

Preferably, the insulation layer may be included on both surfaces of the first electrode.

The uncoated portion of the first electrode may have a structure in which at least a portion of the uncoated portion is bent along a radial direction of the electrode assembly, and the insulation layer may be provided only on a surface toward the bending direction among both surfaces of the first electrode.

One end of the insulation layer in a winding axis direction may be located at a same height as one end of the separation film in the winding axis direction or located outside the one end of the separation film in the winding axis direction.

More preferably, one end of the insulation layer in a winding axis direction may be located at a same height as one end of the separation film in the winding axis direction.

According to an embodiment, the uncoated portion may protrude outwards farther than the insulation layer.

Preferably, the coated portion may not protrude in the winding axis direction farther than the separation film.

In one aspect, the first electrode may be a positive electrode.

According to an embodiment, one end of the second electrode that faces the insulation layer with the separation film between the second electrode and the insulation layer may not protrude outwards farther than one end of the separation film.

The coated portion may include a sliding portion of which the active material layer has a reduced thickness, compared with a center region of the coated portion.

The sliding portion may be formed on a boundary area between the coated portion and the uncoated portion.

The sliding portion may be included in one end of the first electrode and the other end of the second electrode.

Preferably, the sliding portion of the coated portion included in the first electrode and the sliding portion of the coated portion included in the second electrode may be included in opposite directions to each other.

The separation film may protrude outwards farther than the other end of the first electrode and one end of the second electrode.

According to an embodiment, the insulation layer may cover at least a portion of the sliding portion.

In one aspect, the insulation layer may cover the uncoated portion by 0.3 mm to 5 mm.

In other aspect, the insulation layer may cover the uncoated portion by 1.5 mm to 3 mm.

In another aspect, the insulation layer may cover the coated portion by 0.1 mm to 3 mm.

In another aspect, the insulation layer may cover the coated portion by 0.2 mm to 0.5 mm.

According to another embodiment, at least a portion of the uncoated portion may be split into a plurality of segments.

Preferably, the plurality of segments may be bent in a radial direction of the electrode assembly.

In one aspect, the insulation layer may extend to an end of the uncoated portion, on a surface toward the bending direction among both surfaces of the uncoated portion.

In other aspect, the insulation layer may surround the end of the uncoated portion.

In another aspect, the insulation layer may extend up to a bending point of the uncoated portion, on a surface opposite to the surface facing the bending direction among both surfaces of the uncoated portion.

The insulation layer may extend not up to the end of the uncoated portion on a surface that faces in the bending direction from both surfaces of the uncoated portion.

The segments may be provided only in a partial region on one surface of the electrode assembly in a height direction.

An area of a region where the segments are formed on one surface of the electrode assembly in the height direction may be greater than an area of a region where the segments are not formed.

A plurality of segments adjacent to each other in a radial direction of the electrode assembly may overlap each other along the radial direction of the electrode assembly.

The insulation layer provided on one surface positioned in a bending direction of the uncoated portion among both surfaces of the uncoated portion may have a shape extending to an end of the uncoated portion in a region where the segments are formed and have a shape that does not extend to the end of the uncoated portion in a region where the segments are not formed.

According to an embodiment, the uncoated portion included in the first electrode and the uncoated portion included in the second electrode may protrude in opposite directions to each other.

Preferably, a length of the coated portion included in the first electrode in a winding axis direction may be less than a length of the coated portion included in the second electrode in the winding axis direction.

Preferably, the coated portion included in the first electrode may be located inside in the winding axis direction more than the coated portion included in the second electrode.

In one aspect, the insulation layer may be an insulating coating layer or insulation tape included on a boundary area between the uncoated portion and the coated portion.

Preferably, the insulation layer may include an oil-based SBR binder and alumina oxide.

In one aspect of the present disclosure, there is provided a cylindrical secondary battery including: the above-described electrode assembly; a battery can accommodating the electrode assembly and electrically connected to one of the first electrode and the second electrode; an sealing body sealing an open end of the battery can; and a terminal electrically connected to the other of the first electrode and the second electrode and having a surface exposed to the outside.

Preferably, the cylindrical secondary battery may further include a first current collector plate electrically coupled to the uncoated portion included in the first electrode.

Preferably, the uncoated portion may be electrically coupled to the first current collector plate in a region of the uncoated portion not covered with the insulation layer among the entire region of the uncoated portion.

Preferably, the uncoated portion may be coupled to the first current collector plate by welding in a region of the uncoated portion not covered with the insulation layer among the entire region of the uncoated portion.

In one aspect of the present disclosure, there is provided a battery pack including a cylindrical secondary battery according to the present disclosure as described above; and a pack housing accommodating a plurality of cylindrical secondary batteries.

In one aspect of the present disclosure, there is provided a vehicle including a battery pack according to the present disclosure as described above.

### ADVANTAGEOUS EFFECTS

According to the present disclosure, the internal resistance of a cylindrical secondary battery may be remarkably reduced.

Moreover, according to the present disclosure, a short circuit within the cylindrical secondary battery may be effectively prevented by preventing electrical contact between a positive electrode and a negative electrode of an electrode assembly.

The effects of the present disclosure are not limited to the above-described effects, and other effects not mentioned will be clearly understood by a person skilled in the art from the following description.

### DESCRIPTION OF DRAWINGS

The accompanying drawings illustrate a preferred embodiment of the present disclosure, and, together with the following disclosure, serve to provide further understanding of the technical aspects of the present disclosure, and thus, the present disclosure is not construed as being limited to the drawing.
FIG. 1 is a perspective view for explaining a cylindrical secondary battery according to an embodiment of the present disclosure.
FIG. 2 is a longitudinal sectional view of the cylindrical secondary battery of FIG. 1.
FIG. 3 is a view for explaining an electrode assembly included in the cylindrical secondary battery of FIG. 1.
FIG. 4 is a portion of a longitudinal sectional view of the electrode assembly of FIG. 3.
FIG. 5 is a perspective view for explaining an electrode assembly according to another embodiment of the present disclosure.
FIG. 6 is a partial longitudinal sectional view of the electrode assembly of FIG. 5.
FIGS. 7 and 8 are views for explaining modifications of the electrode assembly of FIG. 6.
FIG. 9 is a view for explaining an electrode assembly according to still another embodiment of the present disclosure.
FIGS. 10 and 11 are views for explaining a part of a longitudinal section of the electrode assembly of FIG. 9.
FIG. 12 is a view for explaining an electrode assembly according to a comparative example.
FIG. 13 is a graph for explaining a power distribution in several short-circuit cases within a secondary battery.
FIG. 14 is a perspective view for explaining a battery pack including the cylindrical secondary battery of FIG. 1.
FIG. 15 is a perspective view for explaining a vehicle including the battery pack of FIG. 11.

### IMPLEMENTATION EXAMPLES

Embodiments of the present disclosure will now be described in detail with reference to the accompanying drawings. Terms or words used in the present specification and claims should not be interpreted as being limited to typical or dictionary meanings, but should be interpreted as having meanings and concepts, which comply with the technical aspects of the present invention, based on the principle that an inventor can appropriately define the concept of the term to describe his/her own invention in the best manner. Therefore, configurations illustrated in the embodiments and the drawings described in the present specification are only preferred embodiment of the present disclosure and do not represent all of the technical aspects of the present disclosure, and thus it is to be understood that various equivalents and modified examples, which may replace the configurations, are possible when filing the present application.

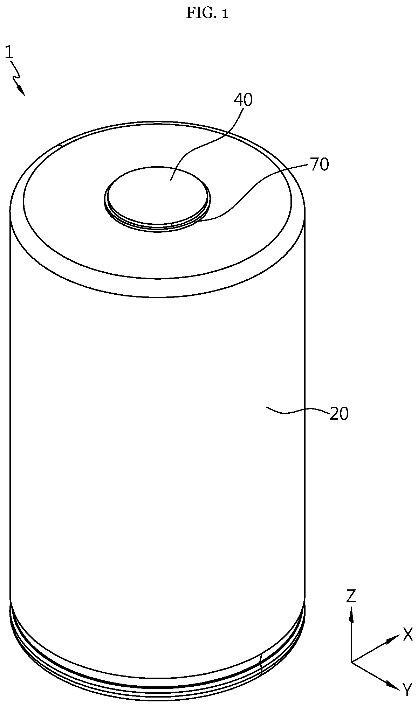

Referring to FIGS. 1 through 3, a cylindrical secondary battery 1 according to an embodiment of the present disclosure includes an electrode assembly 10, a battery can 20, an sealing body 30, and a terminal 40.

The cylindrical secondary battery 1 may further include, in addition to the above-described elements, a first current collector plate 50 and/or an insulator 60 and/or an insulation gasket 70 and/or a second current collector plate 80 and/or a sealing gasket 90.

Referring to FIGS. 1 through 3, the electrode assembly 10 includes a first electrode 11 having a first polarity, a second electrode 12 having a second polarity, a separation film 13 interposed between the first electrode 11 and the second electrode 12, and an insulation layer 14 covering at least a portion of the first electrode 11.

The first electrode 11 is a positive electrode or a negative electrode, and the second electrode 12 corresponds to an electrode having an opposite polarity to that of the first electrode 11. Each of the first electrode 11 and the second electrode 12 may have a sheet shape. The electrode assembly 10 may have, for example, a jelly-roll shape. In other words, the electrode assembly 10 may be manufactured by winding, with respect to a winding center C, a stack formed by sequentially stacking the first electrode 11, the separation film 13, the second electrode 12, and the separation film 13 at least once. Alternatively, an additional separation film 13 may be provided on an outer circumferential surface of the electrode assembly 10 in order to achieve insulation from the battery can 20. The electrode assembly 10 may have any jell-roll winding structure well known in the art without limitation.

The first electrode 11 and the second electrode 12 may include uncoated portions 11a and 12a each not coated with an active material layer, on respective longer edge ends of the first electrode 11 and the second electrode 12, respectively. The first electrode 11 and the second electrode 12 may include coated portions 11b and 12b each coated with an active material layer, on regions of the first electrode 11 and the second electrode 12 excluding the uncoated portions 11a and 12a, respectively.

In detail, the first electrode 11 includes a first electrode current collector and a first electrode active material coated on one surface or both surfaces of the first electrode current collector. A region coated with the first electrode active material on the first electrode current collector is referred to the coated portion 11b included in the first electrode 11. An uncoated portion 11a not coated with the first electrode active material may be present at one end of the first electrode current collector in a width direction (parallel to a Z-axis). A least a portion of the uncoated portion 11a may be used as an electrode tab by itself. In other words, at least a portion of the uncoated portion 11a may function as a first electrode tab provided to the first electrode 11. The uncoated portion 11a included in the first electrode 11 may be provided in an upper portion of the electrode assembly 10 accommodated in the battery can 20, in a height direction (parallel to the Z-axis).

The second electrode 12 includes a second electrode current collector and a second electrode active material coated on one surface or both surfaces of the second electrode current collector. A region coated with the second electrode active material on the second electrode current collector is referred to the coated portion 12b included in the second electrode 12. An uncoated portion 12a not coated with the second electrode active material may be present at the other end of the second electrode current collector in a width direction (parallel to the Z-axis). A least a portion of the uncoated portion 12a may be used as an electrode tab by itself. In other words, at least a portion of the uncoated portion 12a may function as an electrode tab provided to the second electrode 12. The uncoated portion 12a included in the second electrode 12 may be provided in a lower portion of the electrode assembly 10 accommodated in the battery can 20, in the height direction (parallel to the Z-axis).

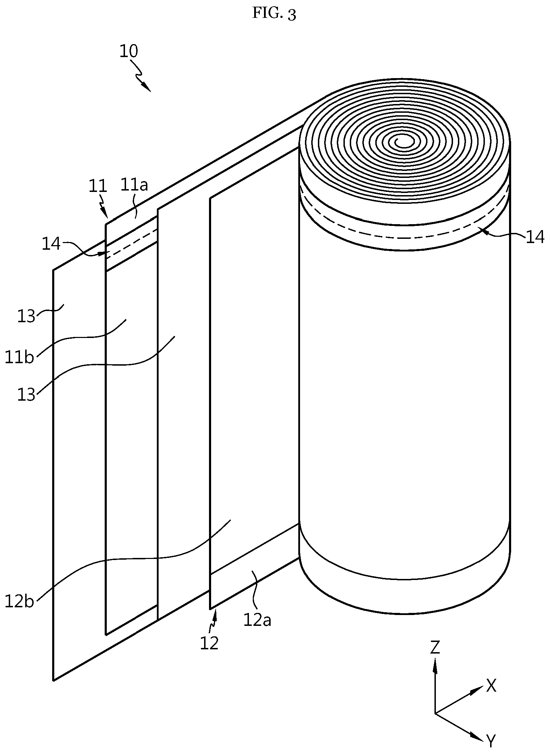

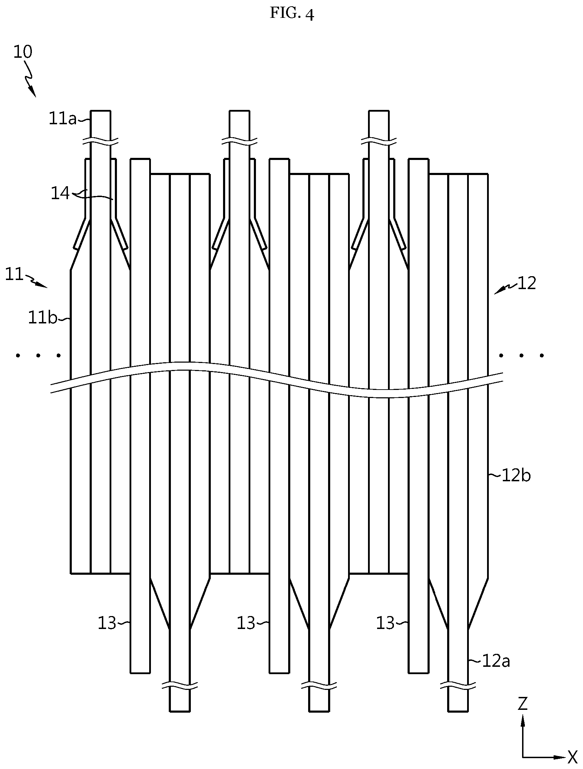

The uncoated portion 11a included in the first electrode 11 and the uncoated portion 12a included in the second electrode 12 may protrude in opposite directions to each other. For example, referring to FIGS. 3 and 4, the uncoated portion 11a included in the first electrode 11 may protrude upwards in the height direction (parallel to the Z-axis) of the electrode assembly 10, and in this case, the uncoated portion 12a included in the second electrode 12 may protrude downwards in the height direction (parallel to the Z-axis). Accordingly, the uncoated portion 11a included in the first electrode 11 and the uncoated portion 12a included in the second electrode 12 may extend and protrude in opposite direction to each other in a winding axis direction of the electrode assembly 10, namely, a height direction (parallel to the Z-axis) of the cylindrical secondary battery 1.

The coated portions 11b and 12b may respectively include sliding portions of which the active material layers have reduced thicknesses, compared with center regions of the coated portions 11b and 12b. For example, referring to FIG. 4, each of the first electrode 11 and the second electrode 12 may include, on one end or the other end thereof, the sliding portion of which the active material layer has a reduced thickness.

The sliding portion may be formed by a sliding phenomenon occurring in the vicinity of the boundary between the coated portion and the uncoated portion when an electrode active material is applied on the electrode current collector. The sliding phenomenon refers to a phenomenon in which, due to spread of a slurry containing an electrode active material, a less electrode active material is coated on a boundary of a slurry-coating region than a region except the boundary of the slurry-coating region, and thus the slurry on the coating boundary region has an approximately inclined shape. Due to this sliding phenomenon, at the edge of the coated portion, a sliding portion having an approximately downwardly inclined shape along a direction from the coated portion toward the uncoated portion may be formed. As such, the sliding phenomenon occurring during the active material applying process may be further intensified during the active material drying process. That is, when an electrode having the sliding portion is entirely dried, the volume of the slurry is reduced as a solvent contained in the slurry is evaporated, and the sliding phenomenon may become more severe near a boundary between a region coated with the electrode active material and a region not coated with the electrode active material.

The sliding portion may be formed at boundary regions between the coated portions 11b and 12b and the uncoated portions 11a and 12a. For example, the sliding portion may be included on one end of the first electrode 11 and the other end of the second electrode 12, respectively. In other words, the sliding portion of the coated portion 11b included in the first electrode 11 and the sliding portion of the coated portion 12b included in the second electrode 12 may be included in opposite directions to each other. For example, referring to FIG. 4, the sliding portion of the first electrode 11 may be formed in an upper portion in a winding axis direction (parallel to the Z-axis), and the sliding portion of the second electrode 12 may be formed in an opposite direction to the sliding portion of the first electrode 11, namely, in a lower portion in the winding axis direction (parallel to the Z-axis).

A length of the coated portion 11b included in the first electrode 11 in the winding axis direction (parallel to the Z-axis) may be less than that of the coated portion 12b included in the second electrode 12 in the winding axis direction (parallel to the Z-axis). The coated portion 11b included in the first electrode 11 may be positioned inwards in the winding axis direction (parallel to the Z-axis) more than the coated portion 12b included in the second electrode 12. For example, referring to FIG. 4, the length of the coated portion 12b included in the second electrode 12 in the winding axis direction (parallel to the Z-axis) may be greater than the length of the coated portion 11b included in the first electrode 11 in the winding axis direction (parallel to the Z-axis). Referring to FIG. 4, the length of the coated portion 11b included in the first electrode 11 in the winding axis direction (parallel to the Z-axis) may also be less than a length of a portion other than the sliding portion of the coated portion 12b included in the second electrode 12 in the winding axis direction (parallel to the Z-axis). This structure is provided to prevent lithium metal from being precipitated due to a reduction of an NP Ratio of a positive electrode/negative electrode to 100% or less.

The coated portions 11b and 12b may not protrude in the winding axis direction (parallel to the Z-axis) farther than the separation film 13. If the coated portions 11b and 12b protrude in the winding axis direction (parallel to the Z-axis) farther than the separation film 13, the possibility of contact between the first electrode 11 and the second electrode 12 may increase. Accordingly, an internal short circuit may occur in a contact area between the first electrode 11 and the second electrode 12, increasing the risk of ignition. Therefore, it is important that the coated portions 11b and 12b do not protrude in the winding axis direction (parallel to the Z-axis) farther than the separation film 13. In other words, it is preferable that the coated portions 11b and 12b are positioned inward from both ends of the separation film 13.

In the present disclosure, a positive electrode active material coated on a positive electrode plate and a negative electrode active material coated on a negative electrode plate may be used without limitation as long as they are active materials known in the art.

In an example, the positive electrode active material may include an alkali metal compound expressed by a general formula of A[AxMy]O2+z (where A includes at least one element selected from Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤ 2, - 0.1 ≤ z ≤ 2; and the stoichiometric coefficients x, y and z are selected such that the compound maintains electrical neutrality).

In another example, the positive electrode active material may be an alkali metal compound xLiM102- (1-x)Li2M203 disclosed in US 6,677,082, US 6,680,143, and the like, wherein M1 includes at least one element having an average oxidation state of 3; M2 includes at least one element having an average oxidation state of 4; 0≤x≤1).

In another example, the positive electrode active material may be lithium metal phosphate expressed by a general formula of LiaM1xFe1-xM2yP1-yM3zO4-z (where M1 includes at least one element selected from Ti, Si, Mn, Co, Fe, V, Cr, Mo, Ni, Nd, Al, Mg, and Al; M2 includes at least one element selected from Ti, Si, Mn, Co, Fe, V, Cr, Mo, Ni, Nd, Al, Mg, Al, As, Sb, Si, Ge, V, and S; M3 includes a halogen group element selectively including F; 0 < a ≤2, 0 ≤ x ≤ 1, 0 ≤ y < 1, 0 ≤ z < 1; the stoichiometric coefficients a, x, y and z are selected such that the compound maintains electrical neutrality), or Li3M2 (PO4)3 [wherein M includes at least one element selected from Ti, Si, Mn, Fe, Co, V, Cr, Mo, Ni, Al, Mg, and Al].

Preferably, the positive electrode active material may include primary particles and/or secondary particles in which primary particles are aggregated.

In an example, as the negative electrode active material, a carbon material, a lithium metal or a lithium metal compound, silicon or a silicon compound, tin or a tin compound may be used. A metal oxide such as TiO2 or SnO2 having an electric potential of less than 2 V may also be used as the negative electrode active material. As the carbon material, a low-crystalline carbon, a high-crystalline carbon, or the like may be used.

As the separation film, a porous polymer film, for example, a porous polymer film manufactured of a polyolefin-based polymer such as an ethylene homopolymer, a propylene homopolymer, an ethylene/butene copolymer, an ethylene/hexene copolymer, or an ethylene/methacrylate copolymer, may be used alone or by stacking these. As another example, as the separation film, a typical porous nonwoven fabric, for example, a nonwoven fabric formed of glass fiber having a high melting point or polyethylene terephthalate fiber, may be used.

A coating layer of inorganic particles may be included on at least one surface of the separation film. The separation film itself may be formed of a coating layer of inorganic particles. Particles constituting the coating layer may have a structure combined with a binder such that an interstitial volume exists between adjacent particles.

The inorganic particles may be formed of an inorganic material having a permittivity of 5 or more As a non-limiting example, the inorganic particles may include at least one material selected from the group consisting of Pb (Zr,Ti)O3 (PZT), Pb1-xLaxZr1-yTiyO3 (PLZT), PB (Mg3Nb2/3)O3-PbTiO3 (PMN-PT), BaTiO3, hafnia (HfO2), SrTiO3, TiO2, A1203, ZrO2, SnO2, CeO2, MgO, CaO, ZnO, and Y2O3.

An electrolyte may be a salt having a structure such as A+B-. Here, A+ includes alkali metal cations such as Li+, Na+, and K+, or an ion corresponding to a combination thereof. B- - includes one or more anions selected from the group consisting of F-, Cl-, Br-, I-, NO3-, N (CN)2-, BF4-, ClO4-, AlO4-, AlCl4-, PF6-, SbF6-, AsF6-, BF2C2O4-, BC4O8-, (CF3)2PF4-, (CF3)3PF3-, (CF3)4PF2-, (CF3)5PF-, (CF3)6P-, CF3SO3-, C4F9SO3-, CF3CF2SO3-, (CF3SO2)2N-, (FSO2)2N-, CF3CF2 (CF3)2CO-, (CF3SO2)2CH-, (SF5)3C-, (CF3SO2)3C-, CF3 (CF2)7SO3-, CF3CO2-, CH3CO2-, SCN-, and (CF3CF2SO2)2N-.

The electrolyte may also be used after being dissolved in an organic solvent. As an organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (γ-butyrolactone), or a mixture thereof may be used.

To minimize the possibility of contact between the first electrode 11 and the second electrode 12, the first electrode 11 according to the present disclosure may include at least one insulation layer 14 that simultaneously covers at least a portion of the uncoated portion and at least a portion of the coated portion. The insulation layer 14 may effectively prevent electrical contact between the first electrode 11 and the second electrode 12. In more detail, the insulation layer 14 may effectively prevent electrical contact between the uncoated portion 11a included in the first electrode 11 and the coated portion 12b included in the second electrode 12.

The insulation layer 14 may be formed on at least one surface of the first electrode 11. For example, the insulation layer 14 may be formed on both surfaces of the first electrode 11. Although not shown in FIG. 4, the separation film 13 is located on both the right and left sides of the first electrode 11, and another second electrode 12 is located on the left side of the separation film 13 located on the left side. Accordingly, to prevent electrical contact with the second electrodes 12 located on the left and right sides of the insulation layer 14, the insulation layers 14 may be formed on both surfaces of the first electrode 11, respectively.

The insulation layer 14 may be formed on an entire region that is likely to face the coated portion 12b included in the second electrode 12, among the region of the first electrode 11. For example, one end of the insulation layer 14 in the winding axis direction (parallel to the Z-axis) may be located at the same height as one end of the separation film 13 in the winding axis direction (parallel to the Z-axis) or may be located outside the one end. In more detail, describing FIG. 4 as an example, one end of the insulation layer 14 in the winding axis direction (parallel to the Z-axis) may be located at the same height as one end of the separation film 13 in the winding axis direction. Because the separation film 13 may protrude between the first electrode 11 and the second electrode 12 in the winding axis direction (parallel to the Z-axis) to the same height as the end of the second electrode 12 or higher, electrical contact between the first electrode 11 and the second electrode 12 may be somewhat prevented. However, because a movement of the first electrode 11 or the second electrode 12, such as serpentine moving, is likely to occur within the cylindrical secondary battery 1, the possibility that the second electrode 12 is located near an end of the separation film 13 may not be excluded. Accordingly, when the second electrode 12 is located at up to the end of the separation film 13 or the second electrode 12 protrudes farther outwards than the end of the separation film 13 due to occurrence of the movement such as serpentine moving, electrical contact between the first electrode 11 and the second electrode 12 may not be avoided. Alternatively, when the separation film 13 is damaged for some reasons, electrical contact between the first electrode 11 and the second electrode 12 may not be avoided. In particular, when an internal short occurs due to contact between the uncoated portion 11a of the first electrode 11 and the coated portion 12b of the second electrode 12, the possibility of ignition is very high. Thus, to prevent electrical contact between the first electrode 11 and the second electrode 12, it is preferable that the insulation layer 14 included in the first electrode 11 at least extends to the same height as the one end of the separation film 13 or extends outwards from the one end.

However, when the insulation layer 14 covers the entirety of the uncoated portion 11a included in the first electrode 11, the first electrode 11 is not able to serve as an electrode, and thus the insulation layer 14 needs to cover only a portion of the uncoated portion 11a included in the first electrode 11. In other words, the uncoated portion 11a may have a shape protruding farther outwards from the insulation layer 14.

The insulation layer 14 may be an insulating coating layer or insulation tape included on a boundary area between the uncoated portion 11a and the coated portion 11b. The shape of the insulation layer 14 is not limited thereto, and any shape enabling the insulation layer 14 to be attached to the first electrode 11 while securing insulation performance may be employed in the present disclosure. The insulation layer 14 may include, for example, an oil-based SBR binder and alumina oxide to ensure insulation performance.

The insulation layer 14 may cover at least a portion of the uncoated portion 11a and at least a portion of the coated portion 11b at the same time. For example, the insulation layer 14 may be formed on the boundary area between the uncoated portion 11a and the coated portion 11b. For example, the insulation layer 14 may cover at least a portion of the sliding portion.

For example, the insulation layer 14 may extend to a point of about 0.3 mm to about 5 mm away from a boundary between the uncoated portion 11a and the coated portion 11b, on the entire region of the uncoated portion 11a included in the first electrode 11. More preferably, the insulation layer 14 may extend to a point of about 1.5 mm to about 3 mm away from the boundary between the uncoated portion 11a and the coated portion 11b, on the entire region of the uncoated portion 11a included in the first electrode 11.

When there are no insulation layers 14, an internal short circuit is likely to occur due to contact between the first electrode 11 and the second electrode 12, and thus it is preferable that the insulation layer 14 extends up to a location where electrical contact between the first electrode 11 and the second electrode 12 does not occur.

The insulation layer 14 may extend to a point of about 0.1 mm to about 3 mm away from the boundary between the uncoated portion 11a and the coated portion 11b, on the entire region of the coated portion 11b included in the first electrode 11. More preferably, the insulation layer 14 may extend to a point of about 0.2 mm to about 0.5 mm away from the boundary between the uncoated portion 11a and the coated portion 11b, on the entire region of the coated portion 11b included in the first electrode 11.

When the insulation layer 14 covers a portion of the coated portion 11b included in the first electrode 11, a capacity loss of the cylindrical secondary battery 1 occurs, and thus there is a need to minimize the coated portion covering length of the insulation layer 14. However, because the coated portion 11b included in the first electrode 11 is likely to contact the second electrode 12, the insulation layer 14 needs to cover at least a portion of the coated portion 11b included in the first electrode 11 in order to prevent the contact.

Referring to FIG. 4, the separation film 13 may have a shape protruding outwards from the other end of the first electrode 11 and one end of the second electrode 12. For convenience of explanation, one end in FIG. 4 refers to an end in an upper direction of the winding axis direction (parallel to the Z-axis), and the other end in FIG. 4 refers to an end in a lower direction of the winding axis direction (parallel to the Z-axis). Thus, the separation film 13 may have a shape protruding outwards farther from a lower end of the first electrode 11 and protruding outwards farther from an upper end of the second electrode 12. The separation film 13 does not protrude from the upper end of the first electrode 11, in order for the upper end of the first electrode 11, namely, the uncoated portion 11a by itself, to function as a tab of the first electrode 11. Similarly, the separation film 13 does not protrude from the lower end of the second electrode 12, in order for the lower end of the second electrode 12, namely, the uncoated portion 12a by itself, to function as an electrode tab provided to the second electrode 12. In the present disclosure, that the uncoated portions 11a and 12a function as electrode tabs means that the uncoated portions 11a and 12a correspond to a connection terminal for electrically connecting other components such as the current collector plates 50 and 80, the battery can 20 and the terminal 40 to the electrode assembly 10.

One end of the second electrode 12 facing the insulation layer 14 with the separation film 13 interposed therebetween may not protrude outwards farther than one end of the separation film 13. For example referring to FIG. 4, the insulation layer 14 is included on one end of the first electrode 11, and one end of the second electrode 12 facing the insulation layer 14 is located inside the separation film 13. Thus, even when one end of the first electrode 11 protrudes outwards from the separation film 13, because one end of the second electrode 12 is located inside the separation film 13, the possibility of contact between the first electrode 11 and the second electrode 12 is significantly reduced. In particular, in this region, when the coated portion 12b formed at one end of the second electrode 12 is exposed to the outside of the separation film 13, the uncoated portion 11a formed at one end of the first electrode 11 and the coated portion 12a formed at one end of the second electrode 12 may come into contact with each other. As described above, when the uncoated portion 11a of the first electrode 11 and the coated portion 12a of the second electrode 12 come into contact with each other, the risk of ignition is very high, and thus, as described above, it is more needed to configure the second electrode 12 not to be exposed to the outside of the separation film 13.

Meanwhile, the uncoated portion 12a of the second electrode 12 may be exposed to the outside of the separation film 13 so that other components may be easily coupled to the uncoated portion 12a provided at the other end of the second electrode 12. In this case, the other end of the first electrode 11 may be located inside the separation film 13 to prevent the contact between the coated portion 11b provided at the other end of the first electrode 11 and the uncoated portion 12a provided at the other end of the second electrode 12. However, in the lower part of the electrode assembly 10 of the present disclosure, the insulation layer 14 may not be applied on the second electrode 12 unlike the upper part.

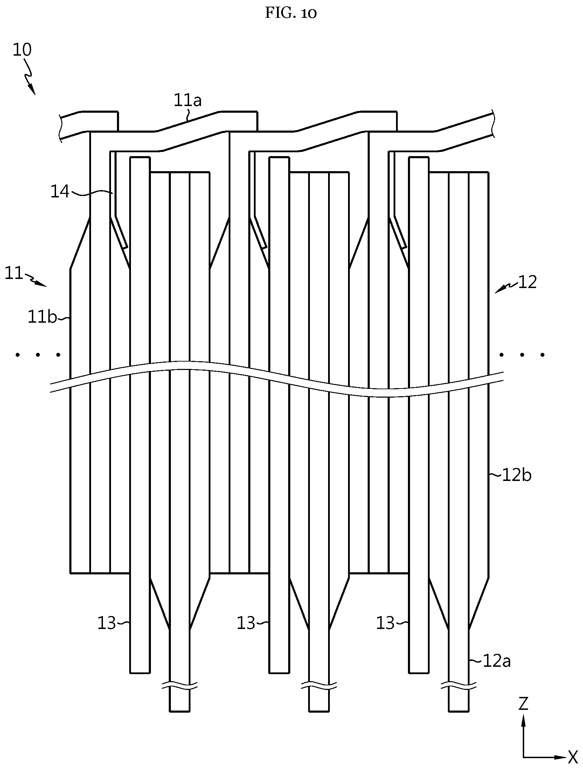

In particular, when the first electrode 11 is a positive electrode and the second electrode 12 is a negative electrode, an insulation layer 14 may be formed on the uncoated portion 11a of the first electrode 11 in consideration of the process efficiency and productivity as well as the risk of a short circuit, and the insulation layer 14 may not be applied on the uncoated portion 12a of the second electrode 12. This is because, in particular, the greatest risk occurs when the uncoated portion of the positive electrode and the coated portion of the negative electrode come into contact with each other. The difference in risk in various cases in which the positive electrode and the negative electrode come into contact with each other will be described later in detail with reference to FIG. 10. On the other hand, the present disclosure does not exclude the case where the insulation layer 14 is provided on the uncoated portion 12a of the second electrode 12.

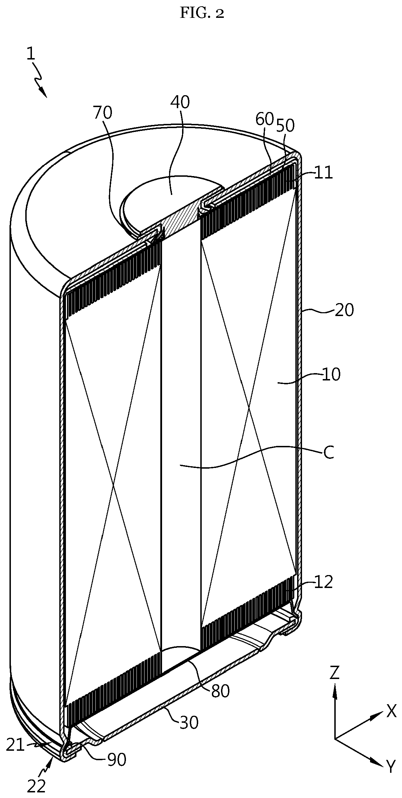

Referring to FIGS. 1 and 2, the battery can 20 is a substantially cylindrical container having an open portion at a lower end thereof, and is formed of, for example, a conductive material such as metal. The material of the battery can 20 may be, for example, aluminum, steel, stainless steel or the like. A bottom of the battery can 20 including the open portion is referred to as an open end. A lateral surface (outer circumferential surface) and an upper surface of the battery can 20 may be integrally formed. The upper surface (surface parallel to an X-Y plane) of the battery can 20 is approximately flat. The upper surface of the battery can 20 opposite to the open end is referred to as a closed end. The battery can 20 accommodates the electrode assembly 10 through the open portion formed in the lower portion thereof, and also accommodates an electrolyte.

The battery can 20 is electrically connected to the electrode assembly 10. The battery can 20 may be electrically connected to one of the first electrode 11 and the second electrode 12. For example, the battery can 20 may be electrically connected to the second electrode 12 of the electrode assembly 10. In this case, the battery can 20 may have the same polarity as the second electrode 12.

Referring to FIG. 2, the battery can 20 may include a beading portion 21 and a crimping portion 22 formed at the lower end thereof. The beading portion 21 is located below the electrode assembly 10. The beading portion 21 is formed by press-fitting a circumference of the outer circumferential surface of the battery can 20. The beading portion 21 prevents the electrode assembly 10, which may have a size approximately corresponding to an internal diameter of the battery can 20, from escaping through the open portion formed at the lower end of the battery can 20, and may function as a support portion on which the sealing body 30 is seated.

The crimping portion 22 is formed under the beading portion 21. The crimping portion 22 has an extended and bent shape to surround an outer circumferential surface of the sealing body 30 arranged below the beading portion 21 and a portion of a lower surface of the sealing body 30.

However, the present disclosure does not exclude a case in which the battery can 20 does not include the beading portion 21 and/or the crimping portion 22 described above. In other words, in the present disclosure, when the battery can 20 does not include the beading portion 21 and/or the crimping portion 22, the electrode assembly 10 may be fixed and/or the battery can 20 may be sealed, for example, by further applying a component part capable of functioning as a stopper with respect to the electrode assembly 10. When the cylindrical secondary battery 1 according to an embodiment of the present disclosure includes the sealing body 30, the electrode assembly 10 may be fixed and/or the battery can 20 may be sealed, for example, by further applying a structure on which the sealing body 30 may be seated and/or by performing welding between the battery can 20 and the sealing body 30 such that the sealing body 30 may seal the open end of the battery can 20.

Referring to FIG. 2, the sealing body 30 may be formed of, for example, a metal material, to ensure rigidity. The sealing body 30 may cover the open end formed at the lower end of the battery can 20. In other words, the sealing body 30 forms a lower surface of the cylindrical secondary battery 1. In the cylindrical secondary battery 1 according to an embodiment of the present disclosure, the sealing body 30 may have no polarity even when the sealing body 30 includes a metal material having conductivity. When the sealing body 30 has no polarity, it may mean that the sealing body 30 is electrically insulated from the battery can 20 and the terminal 40. Accordingly, the sealing body 30 does not function as a positive electrode terminal 40 or a negative electrode terminal 40. Thus, the sealing body 30 does not need to be electrically connected to the electrode assembly 10 and the battery can 20, and the material thereof does not necessarily have to be a conductive metal.

When the battery can 20 according to the present disclosure includes the beading portion 21, the sealing body 30 may be seated on the beading portion 21 formed in the battery can 20. When the battery can 20 according to the present disclosure includes the crimping portion 22, the sealing body 30 is fixed by the crimping portion 22. The sealing gasket 90 may be arranged between the sealing body 30 and the crimping portion 22 of the battery can 20 to ensure airtightness of the battery can 20. As described above, the battery can 20 according to the present disclosure may not include the beading portion 21 and/or the crimping portion 22. In this case, to ensure airtightness of the battery can 20, the sealing gasket 90 may be arranged between the sealing body 30 and a fixation structure (crimping portion 22) provided at the open portion of the battery can 20.

Referring to FIGS. 1 and 2, the terminal 40 may be electrically connected to one of the first electrode 11 and the second electrode 12. In other words, the terminal 40 may have an opposite polarity to that of the battery can 20. For example, the terminal 40 may be electrically connected to the first electrode 11 of the electrode assembly 10. A surface of the terminal 40 may be exposed to the outside.

The terminal 40 may be formed of a metal material having conductivity. The terminal 40 may pass through, for example, an approximate center portion of the closed end of the battery can 20. A portion of the terminal 40 may be exposed to the upper side of the battery can 20, and the remaining portion thereof may be located within the battery can 20. The terminal 40 may be fixed onto an inner surface of the closed end of the battery can 20 by, for example, riveting. The terminal 40 may pass through the insulator 60 and be coupled to the first current collector plate 50 or the uncoated portion 11a included in the first electrode 11. In this case, the terminal 40 may have a first polarity. Accordingly, the terminal 40 may function as a first electrode terminal of the cylindrical secondary battery 1 according to an embodiment of the present disclosure. When the terminal 40 has the first polarity as described above, the terminal 40 is electrically insulated from the battery can 20 having a second polarity. The electrical insulation between the terminal 40 and the battery can 20 may be implemented in various ways. For example, insulation may be implemented by arranging the insulation gasket 70, which will be described later, between the terminal 40 and the battery can 20. Alternatively, insulation may be implemented by forming an insulating coating layer on a portion of the terminal 40. Alternatively, a method of structurally and firmly fixing the terminal 40 to prevent contact between the terminal 40 and the battery can 20 may be applied. Alternatively, a plurality of methods among the above-described methods may be applied together.

Referring to FIG. 2, the first current collector plate 50 may be coupled to an upper portion of the electrode assembly 10. For example, the first current collector plate 50 above the electrode assembly 10 may be coupled to the uncoated portion 11a included in the first electrode 11. The first current collector plate 50 may be formed of a metal material having conductivity. Although not shown in the drawings, the first current collector plate 50 may include a plurality of protrusions radially formed on a lower surface thereof. When the plurality of irregularities are included, the first current collector plate 50 is pressed such that the plurality of protrusions may be press-fitted onto the uncoated portion 11a included in the first electrode 11.

According to another embodiment of the present disclosure, the cylindrical secondary battery 1 may not include the first current collector plate 50. In this case, the uncoated portion 11a included in the first electrode 11 may be electrically connected directly to the terminal 40.

Referring to FIG. 2, the first current collector plate 50 may be coupled to an end of the uncoated portion 11a included in the second electrode 11. The coupling between the uncoated portion 11a included in the first electrode 11 and the first current collector plate 50 may be achieved by, for example, laser welding. The laser welding may be performed by partially melting a base member of the first current collector plate 50 or optionally may be performed with a solder for welding interposed between the first current collector plate 50 and the uncoated portion 11a. In this case, it is preferable that the solder has a lower melting point than the first current collector plate 50 and the uncoated portion 11a. Resistance welding, ultrasonic welding, spot welding etc. may be used in addition to the laser welding, but a welding method is not limited thereto.

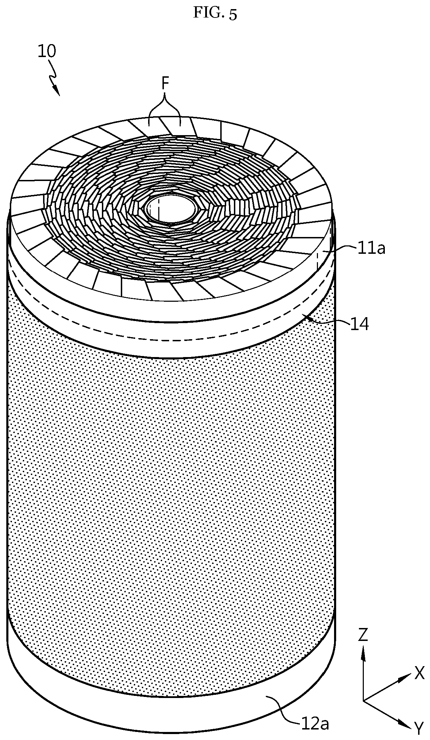

Referring to FIG. 5, the first current collector plate 50 may be coupled to a coupling surface formed by bending an end of the uncoated portion 11a included in the first electrode 11 in a direction parallel to the first current collector plate 50. The bending direction of the uncoated portion 11a may be, for example, a direction toward the winding center C (See Fig. 2) of the electrode assembly 10. When the uncoated portion 11a has a bent shape as described above, a space occupied by the uncoated portion 11a may be reduced, thereby improving energy density. In addition, due to an increase in the coupling area between the uncoated portion 11a and the first current collector plate 50, a coupling force may be improved and also resistance may be reduced.

Referring to FIG. 2, the insulator 60 may be provided between the upper end of the electrode assembly 10 and an inner surface of the battery can 20 or between the first current collector plate 50 and the inner surface of the battery can 20. The insulator 60 prevents contact between the uncoated portion 11a included in the first electrode 11 and the battery can 20 and/or between the current collector plate 50 and the battery can 20. In other words, the insulator 60 is accommodated within the battery can 20 and is configured to block electrical connection between the uncoated portion 11a included in the first electrode 11 and the battery can 20. Accordingly, the insulator 60 may be formed of a material having insulating property. For example, the insulator 60 may include a polymer material.

Referring to FIGS. 1 and 2, the insulation gasket 70 is arranged between the cell terminal 50 and the battery can 20 to prevent contact between the battery can 20 and the terminal 40 having opposite polarities to each other. In other words, the insulation gasket 70 blocks electrical connection between the battery can 20 and the terminal 40. Accordingly, the upper surface of the battery can 20 having an approximately flat shape may function as another terminal electrically connected to the second electrode 12 of the cylindrical secondary battery 1.

Referring to FIG. 2, the second current collector plate 80 may be coupled to a lower portion of the electrode assembly 10. The second current collector plate 80 may be formed of a metal material having conductivity. The second current collector plate 80 may be connected to the uncoated portion 12a included in the second electrode 12. The second current collector plate 80 may be electrically connected to the battery can 20. At lease a circumferential portion of the second current collector plate 80 may be fixed by being interposed between the inner surface (lower surface) of the beading portion 21 of the battery can 20 and the sealing gasket 90 as shown in FIG. 2. Alternatively, the second current collector plate 80 may be welded on the inner surface of the battery can 20 other than the inner surface (lower surface) of the beading portion 21 of the battery can 20.

Although not shown in the drawings, the second current collector plate 80 may include a plurality of protrusions radially formed on one surface thereof. When the plurality of protrusions are included, the second current collector plate 80 is pressed such that the plurality of protrusions may be press-fitted onto the uncoated portion 12a included in the second electrode 12.

Referring to FIG. 2, the second current collector plate 80 may be coupled to an end of the uncoated portion 12a included in the second electrode 12. The coupling between the uncoated portion 12a included in the second electrode 12 and the second current collector plate 80 may be achieved by, for example, laser welding. The laser welding may be performed by partially melting a base member of the second current collector plate 80 or optionally may be performed with a solder interposed between the second current collector plate 80 and the uncoated portion 12a. In this case, it is preferable that the solder has a lower melting point than the second current collector plate 80 and the uncoated portion 12a. Resistance welding, ultrasonic welding, spot welding etc. may be used in addition to the laser welding, but a welding method is not limited thereto.

Although not shown in the drawings, the second current collector plate 80 may be coupled to a coupling surface formed by bending an end of the uncoated portion 12a included in the second electrode 12 in a direction parallel to the second current collector plate 80. The bending direction of the uncoated portion 12a included in the second electrode 12 may be, for example, a direction toward the winding center C (See Fig. 2) of the electrode assembly 10. When the uncoated portion 12a included in the second electrode 12 has a bent shape as described above, a space occupied by the uncoated portion 12a may be reduced, thereby improving energy density. In addition, due to an increase in the coupling area between the uncoated portion 12a and the second current collector plate 80, a coupling force may be improved and also resistance may be reduced.

Referring to FIG. 2, the sealing gasket 90 may have an approximately ring shape that surrounds a circumferential portion of the sealing body 30. The sealing gasket 90 may cover a lower surface, an upper surface, and lateral surfaces of the sealing body 30 at the same time. A radial direction length of a portion of the sealing gasket 90 that covers the upper surface of the sealing body 30 may be less than or equal to a radial direction length of a portion of the sealing gasket 90 that covers the lower surface of the sealing body 30. When the radial direction length of a portion of the sealing gasket 90 that covers the upper surface of the sealing body 30 is excessively large, the sealing gasket 90 presses the second current collector plate 80 in a sizing process of vertically compressing the battery can 20, and thus the second current collector plate 80 may be damaged or the battery can 20 may be damaged. Accordingly, the radial direction length of a portion of the sealing gasket 90 that covers the upper surface of the sealing body 30 needs to be kept small at a certain level.

Because an electrode assembly 10 according to the embodiment of FIG. 5 is similar to the electrode assembly 10 according to the embodiment of FIG. 3, components according to the embodiment of FIG. 5 that are substantially the same as or similar to those according to the embodiment of FIG. 3 will not be repeated herein, and differences therebetween will be focused on and described.

Referring to FIG. 5, the electrode assembly 10 according to another embodiment of the present disclosure may have a structure in which at least a portion of the uncoated portions 11a and 12a is bent in a radial direction of the electrode assembly 10. For example, the electrode assembly 10 according to another embodiment of the present disclosure may have a structure in which at least a portion of the uncoated portions 11a and 12a is bent toward a core of the electrode assembly 10. For example, referring to FIG. 5, at least a portion of the uncoated portions 11a and 12a may be split into a plurality of segments F. The plurality of segments F may be overlapped in multiple layers while being bent toward the core. For example, the plurality of segments F may be notched by laser. The segments F may be formed by a well-known metal foil cutting process such as ultrasonic cutting or punching. A plurality of segments F adjacent to each other in a radial direction of the electrode assembly 10 may overlap each other as they are bent in a radial direction of the electrode assembly 10. The number of overlapping layers of the segments F may vary along the radial direction, and the number of overlapping layers may be maintained in a certain region. The segments F may be formed in the uncoated portion 11a of the first electrode 11 and/or the uncoated portion 12a of the second electrode 12.

To prevent damage to the active material layers and/or the insulation layer 14 during bending of the uncoated portions 11a and 12a, a predetermined gap is preferably provided between a cutting line lower end of the segments F and the active material layers. This is because, when the uncoated portions 11a and 12a are bent, a stress is concentrated near the cutting line lower end. The gap is preferably 0.2 mm to 4 mm. When the gap is controlled to the numerical value range, the active material layers and/or the insulation layer 14 near the cutting line lower end may be prevented from being damaged by a stress generated during bending of the uncoated portions 11a and 12a. The gap may also prevent the active material layers and/or the insulation layer 14 from being damaged due to tolerances during notching or cutting of the segments F.

The bending direction of the uncoated portions 11a and 12a may be, for example, a direction toward the winding center C of the electrode assembly 10. When the uncoated portions 11a and 12a have a bent shape as described above, a space occupied by the uncoated portions 11a and 12a may be reduced, thereby improving energy density. In addition, due to an increase in the coupling area between the uncoated portions 11a and 12a and the first and second current collector plates 50 and 80, a coupling force may be further improved and also resistance may be further reduced.

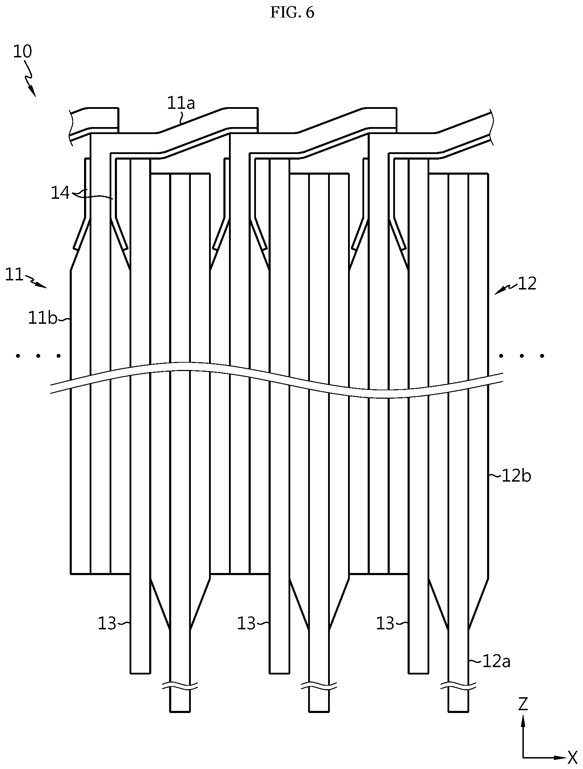

Referring to FIGS. 5 and 6, the uncoated portion 11a included in the first electrode 11 may be bent in one direction. For example, in FIG. 6, a +X direction may be a direction toward the core. When the uncoated portion 11a is bent toward the core as described above, the uncoated portion 11a of the first electrode 11 may approach toward the second electrode 12 beyond the separation film 13. Accordingly, the insulation layer 14 may extend to an end of the uncoated portion 11a included in the first electrode 11, on a surface facing the core among both surfaces of the uncoated portion 11a. According to this structure, even when the uncoated portion 11a is bent toward the core and extends beyond the separation film 13 to approach the second electrode 12, electrical contact between the first electrode 11 and the second electrode 12 may be prevented. Thus, the internal short circuit of the cylindrical secondary battery 1 may be effectively prevented.

Meanwhile, unlike shown in FIGS. 6 to 8, the insulation layer 14 may not extend to the end of the uncoated portion 11a on a surface located in the bending direction among both surfaces of the uncoated portion 11a. That is, at least a portion of the inner surface of the bent uncoated portion 11a may not be covered by the insulation layer 14. This is to enable the overlapping segments F to be electrically connected to each other when the bent segments F (see FIG. 5) overlap each other along the radial direction of the electrode assembly 10.

Meanwhile, when the uncoated portion 11a of the first electrode 11 has a shape bent in one direction, the insulation layer 14 may be provided only on one surface positioned in the bending direction among both surfaces of the uncoated portion 11a. For example, when the uncoated portion 11a is bent in a direction toward the winding center C, the insulation layer 14 may be provided only on the surface facing the winding center C among both surfaces of the uncoated portion 11a. This is because, when the uncoated portion 11a of the first electrode 11 is bent in one direction, the probability of contact with the second electrode 12 located in the bending direction is greater than the probability of contact with the second electrode 12 located in the opposite direction.

According to another embodiment of the present disclosure, when the uncoated portion 11a of the first electrode 11 has a shape bent in one direction and the insulation layer 14 is provided on both surfaces of the uncoated portion 11a of the first electrode 11, the insulation layer 14 provided in the bending direction may have a greater thickness than the insulation layer 14 provided at the opposite side. In this case, it is possible to compensate for the decrease in rigidity that may occur in the bent portion of the uncoated portion 11a corresponding to a thin metal foil.

Referring to FIG. 6, the insulation layer 14 may be included only on a partial region of a surface opposite to the surface facing the core among both surfaces of the uncoated portion 11a. In other words, the upper region of the surface opposite to the surface facing the core among both surfaces of the uncoated portion 11a may be exposed to the outside. Accordingly, through the exposed region of the surface of the uncoated portion 11a opposite to the surface facing the core, the uncoated portion 11a may electrically contact another uncoated portion 11a included in an adjacent first electrode 11 (not shown) at the left side or the first current collector plate 50. Preferably, the uncoated portion 11a may be electrically coupled to the first current collector plate 50 in a region of the uncoated portion 11a not covered with the insulation layer 14 from the entire region of the uncoated portion 11a and bent to the core of the electrode assembly 10. Furthermore, the uncoated portion 11a may be coupled to the first current collector plate 50 by welding in the region of the uncoated portion 11a not covered with the insulation layer 14 from the entire region of the uncoated portion 11a. The welding may be, for example, laser welding. The laser welding may be performed by partially melting a base member of the first current collector plate 50 or may be performed with a solder for welding interposed between the first current collector plate 50 and the uncoated portion 11a. In this case, it is preferable that the solder has a lower melting point than the first current collector plate 50 and the uncoated portion 11a. Resistance welding, ultrasonic welding, spot welding etc. may be used in addition to the laser welding, but a welding method is not limited thereto.

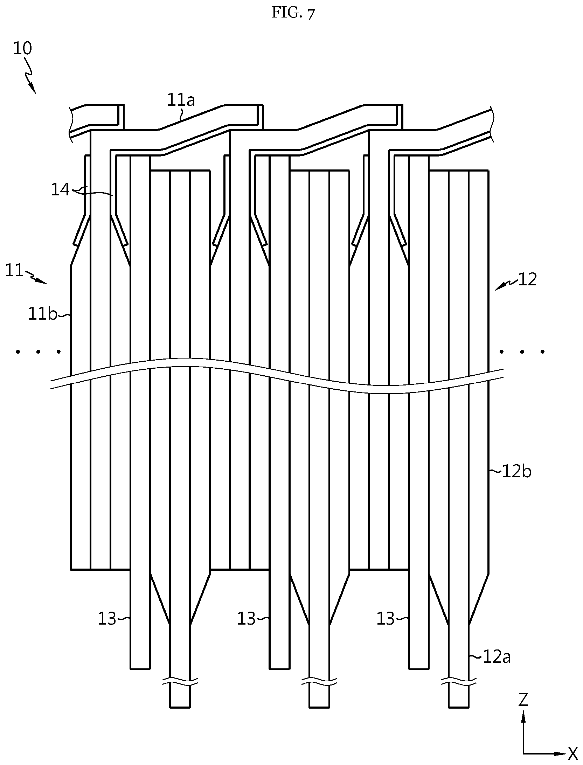

Referring to FIG. 7, the insulation layer 14 may have a shape surrounding an end of the uncoated portion 11a. In detail, the insulation layer 14 may have a shape surrounding an end surface of the uncoated portion 11a. For example, when a length of the bent uncoated portion 11a is large, the possibility of contact with the second electrode 12 increases. Moreover, the bent uncoated portion 11a is likely to be further bent by a vibration or an external impact. In this case, the possibility that the end surface of the bent uncoated portion 11a contacts the second electrode 12 increases. However, according to this structure of the present disclosure, even when the uncoated portion 11a is further bent or deformed, because the insulation layer 14 covers up to the end surface of the uncoated portion 11a, electrical contact between the first electrode 11 and the second electrode 12 may be prevented.

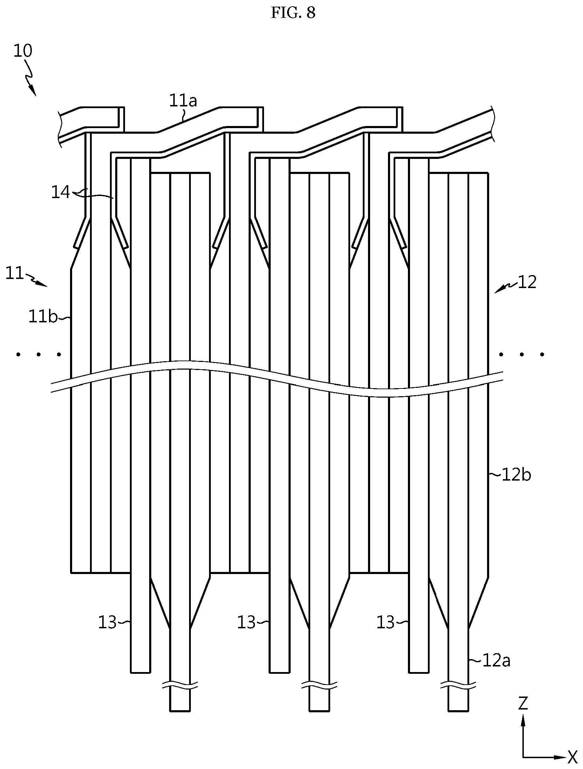

Referring to FIG. 8, the insulation layer 14 may extend up to a bending point of the uncoated portion 11a, on the surface opposite to the surface facing the core among both surfaces of the uncoated portion 11a. Although not shown in the drawings, another separation film 13 and another second electrode 12 are located on the left side of the first electrode of FIG. 8. In other words, the first electrode 11 is likely to electrically contact not only the second electrode 12 located on the right side of the first electrode 11 but also the second electrode 12 located on the left side of the first electrode 11. However, according to this structure of the present disclosure, electrical contact between the first electrode 11 and the second electrodes 12 located on both sides thereof may be securely prevented.

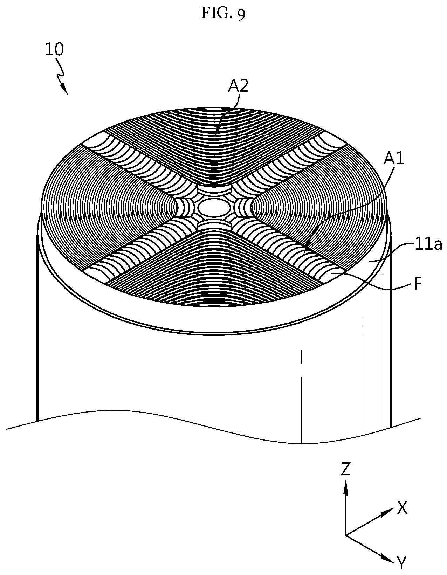

On the other hand, referring to FIGS. 9 to 11, in the electrode assembly 10 according to another embodiment of the present disclosure, unlike the electrode assembly 10 shown in FIG. 5, segments F may not be provided over the entire area on one surface of the electrode assembly 10 in the height direction (direction parallel to the Z axis), but may be provided only in a partial area. For example, on one surface of the electrode assembly 10 in the height direction, the area occupied by region A1 where the segments F may be larger than the area occupied a region A2 where the segments F are not formed. Meanwhile, in the region A2 where the segments F are not formed, a portion of the uncoated portion 11a may be cut and removed to have approximately the same height as the region A2 where the segments F are formed. Hereinafter, a case in which segments F are formed in the uncoated portion 11a of the first electrode 11 will be described as an example, but in the present disclosure, segments F may be formed in the uncoated portion 11a of the first electrode 11 and/or the uncoated portion 12a of the second electrode 12.

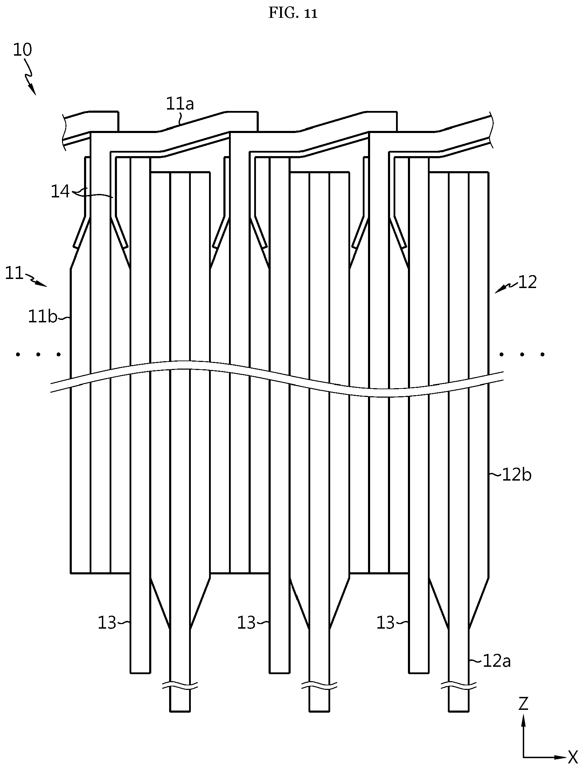

The segments F may be discontinuously formed along the winding direction of the first electrode 11. In this case, the current collector plate 50 may be coupled to the region A1 where the segments F are formed. A plurality of segments F adjacent to each other in a radial direction of the electrode assembly 10 may overlap in a radial direction of the electrode assembly 10. In this case, the insulation layer 14 provided on one surface positioned in the bending direction of the uncoated portion 11a among both surfaces of the uncoated portion 11a of the first electrode 11 may have a shape extending to the end of the uncoated portion 11a in the region A1 where the segments F are formed, and may have a shape that does not extend to the end in the region A2 where the segments F are not formed. For example, the insulation layer 14 has a shape (see FIG. 11) extending only to the bending point of the uncoated portion 11a in the region where the segments F are formed (see FIG. 11) or may have a shape extending to cover only a partial region of the inner surface of the uncoated portion 11a bent in the radial direction of the electrode assembly 10 over the bending point (see FIG. 10).

Meanwhile, in FIGS. 9 to 11, a structure in which the insulation layer 14 is formed only on one surface of the first electrode 11 is illustrated, but the present disclosure is not limited thereto. That is, in the embodiment of the electrode assembly 10 shown in FIGS. 9 to 11, as in the case of the electrode assembly 10 described with reference to FIGS. 5 to 8, the insulation layer 14 may be formed on one surface or both surfaces of the uncoated portion 11a.

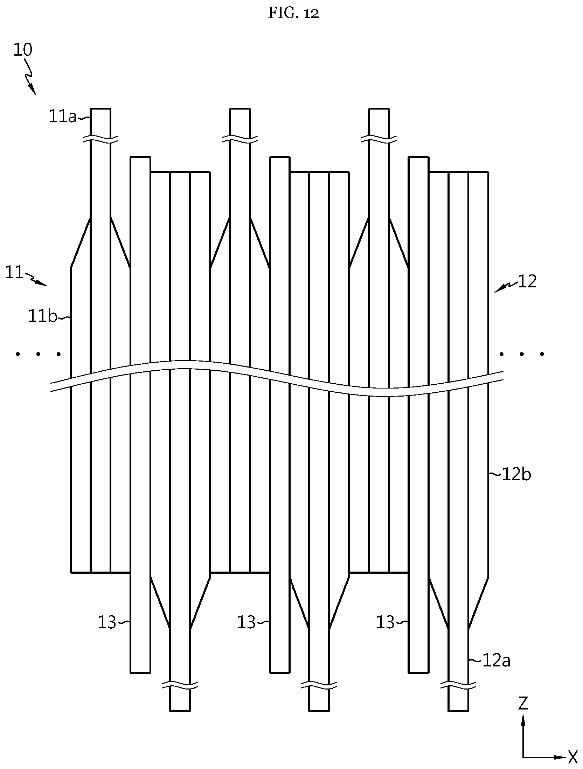

FIG. 12 is a cross-sectional view of an electrode assembly 10 including no insulation layers 14, according to a comparative example. Referring to FIG. 12, no insulation layers 14 are formed on a boundary area between an uncoated portion 11a and a coated portion 11b of a first electrode 11. According to this structure, when a movement of the first electrode 11 or a second electrode 12, such as serpentine moving, occurs, the second electrode 12 is located at up to an end of a separation film 13 or the second electrode 12 protrudes farther outwards than the end of the separation film 13, and thus electrical contact between the first electrode 11 and the second electrode 12 may occur. Alternatively, when the separation film 13 is damaged for some reasons, electrical contact between the first electrode 11 and the second electrode 12 may occur. In this case, in the electrode assembly 10 having the structure of FIG. 12, electrical contact between the first electrode 11 and the second electrode 12 causes an internal short circuit to occur. Thus, the risk of ignition increases.

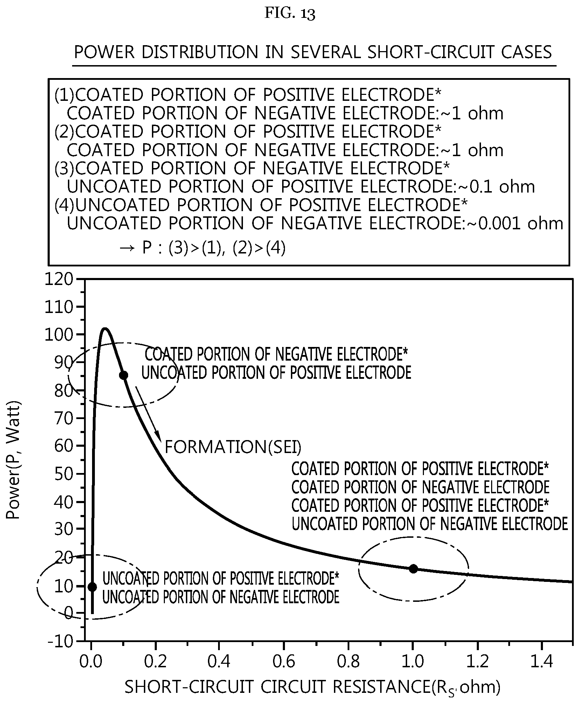

FIG. 13 is a graph for explaining a power distribution in several short-circuit cases within the cylindrical secondary battery 1. Referring to FIG. 10, the following four short-circuit cases that may occur in the cylindrical secondary battery 1 may be assumed.

There are a case (i) where a coated portion included in a positive electrode and a coated portion included in a negative electrode electrically contact each other, a case (ii) where the coated portion included in the positive electrode and an uncoated portion included in the negative electrode electrically contact each other, a case (iii) where the coated portion included in the negative electrode and an uncoated portion included in the positive electrode electrically contact each other, and a case (iv) where the uncoated portion included in the positive electrode and the uncoated portion included in the negative electrode electrically contact each other.

Referring to FIG. 13, it can be seen that power is highest in the case (iii) where the coated portion included in the negative electrode and the uncoated portion included in the positive electrode electrically contact each other. In other words, the possibility of ignition occurrence is very high in the case (iii) where the coated portion included in the negative electrode and the uncoated portion included in the positive electrode electrically contact each other. This is because a short-circuit current is large due to a very low resistance and accordingly a temperature rapidly increases.

Thus, considering the structure of the electrode assembly 10 according to the present disclosure, there is a demand for a structure capable of preventing electrical contact between a coated portion included in a negative electrode and an uncoated portion included in a positive electrode.

As a result of intensive study on these problems, the present inventors have found that, when the insulating layer 14 is provided on at least a partial region of an uncoated portion included in a positive electrode, electrical contact with a coated portion included in a negative electrode can be effectively prevented, thereby completing the present disclosure. In other words, the first electrode 11 may be a positive electrode. However, the first electrode 11 is not limited to a positive electrode, and may be a negative electrode. The present disclosure does not exclude a case where the insulation layer 14 is formed on the second electrode 12. In other words, the insulation layer 14 may be formed on both a positive electrode and a negative electrode. In this case, all possible short-circuit cases may be prevented.

Preferably, a cylindrical battery cell may be, for example, a cylindrical battery cell of which a ratio of form factors (defined by a value obtained by dividing a diameter of the cylindrical battery cell by a height thereof, i.e. a ratio of a diameter (Φ) to a height (H)) is greater than about 0.4.

Here, the form factors refer to values indicating the diameter and the height of the cylindrical battery cell. A cylindrical battery cell according to an embodiment of the present disclosure may be, for example, a 46110 cell, a 48750 cell, a 48110 cell, a 48800 cell, or a 46800 cell. Of a numerical value indicating a form factor, the first two numbers indicate a diameter of a cell, the next two numbers indicate a height of the cell, and the last number 0 indicates that the cell has a circular cross-section.

A battery cell according to an embodiment of the present disclosure is a cell having an approximately cylindrical shape, and may be a cylindrical battery cell having a diameter of about 46 mm, a height of about 110 mm, and a form factor ratio of about 0.418.

A battery cell according to another embodiment of the present disclosure is a cell having an approximately cylindrical shape, and may be a cylindrical battery cell having a diameter of about 48 mm, a height of about 75 mm, and a form factor ratio of about 0.640.

A battery cell according to another embodiment of the present disclosure is a cell having an approximately cylindrical shape, and may be a cylindrical battery cell having a diameter of about 48 mm, a height of about 110 mm, and a form factor ratio of about 0.418.

A battery cell according to another embodiment of the present disclosure is a cell having an approximately cylindrical shape, and may be a cylindrical battery cell having a diameter of about 48 mm, a height of about 80 mm, and a form factor ratio of about 0.600.

A battery cell according to another embodiment of the present disclosure is a cell having an approximately cylindrical shape, and may be a cylindrical battery cell having a diameter of about 46 mm, a height of about 80 mm, and a form factor ratio of about 0.575.

According to the related art, battery cells having a form factor ratio of about 0.4 or less are used. In other words, according to the related art, for example, a 18650 cell, a 21700 cell, etc. are used. The 18650 cell has a diameter of about 18 mm, a height of about 65 mm, and a form factor ratio of about 0.277. The 21700 cell has a diameter of about 21 mm, a height of about 70 mm, and a form factor ratio of about 0.300.

The battery cells according to the above-described embodiments may be used to manufacture a battery pack.

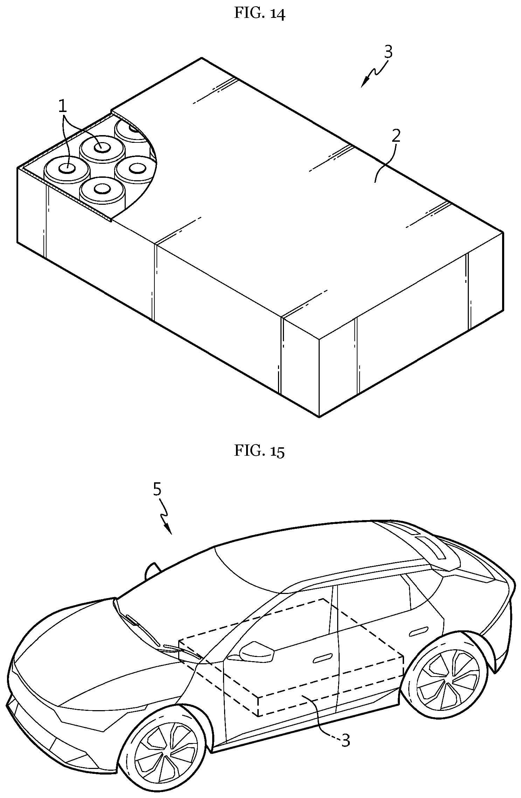

FIG. 14 is a perspective view illustrating a structure of a battery pack according to an embodiment of the present disclosure.

Referring to FIG. 14, a battery pack 3 according to an embodiment of the present disclosure includes an assembly in which cylindrical secondary batteries 1 are electrically connected to each other, and a pack housing 2 accommodating the assembly. The cylindrical secondary batteries 1 are the battery cells according to the above-described embodiments. In the drawings, for convenience of illustration, components such as a bus bar for electrical connection between the cylindrical secondary batteries 1, a cooling unit, and an external terminal are omitted.

The battery pack 3 may be mounted on a vehicle. Examples of the vehicle may include an electric vehicle, a hybrid vehicle, or a plug-in hybrid vehicle. The vehicle includes a four-wheeled vehicle or a two-wheeled vehicle.

FIG. 15 is a perspective view for explaining a vehicle including the battery pack 3 of FIG. 11.

Referring to FIG. 15, a vehicle 5 according to an embodiment of the present disclosure includes the battery pack 3 according to an embodiment of the present disclosure. The vehicle 5 operates by receiving power from the battery pack 3 according to an embodiment of the present disclosure.

While the present disclosure has been particularly shown and described with reference to exemplary embodiments thereof, the present disclosure is not limited thereto, and it will be understood by those of ordinary skill in the art that various changes in form and details may be made therein without departing from the spirit and scope as defined by the following claims.

### EXPLANATION OF REFERENCE NUMERALS

- 5:: vehicle
- 3:: battery pack
- 2:: pack housing
- 1:: cylindrical secondary battery
- 10:: electrode assembly
- C:: winding center
- 11:: first electrode
- 11a:: uncoated portion
- 11b:: coated portion
- 12:: second electrode
- 12a:: uncoated portion
- 12b:: coated portion
- 13:: separation film
- 20:: battery can
- 21:: beading portion
- 22:: crimping portion
- 30:: sealing body
- 40:: terminal
- 50:: first current collector plate
- 60:: insulator
- 70:: insulation gasket
- 80:: second current collector plate
- 90:: sealing gasket

In view of the foregoing disclosure, the present invention may be implemented in accordance with the following itemized embodiment examples.

Item 1. An electrode assembly of a jelly-roll type having a structure in which a first electrode and a second electrode each having a sheet shape and a separation film interposed between the first electrode and the second electrode are wound in one direction, wherein
each of the first electrode and the second electrode comprises:
an uncoated portion not coated with an active material layer and formed on a longer edge end; and
a coated portion coated with an active material layer and formed on a region excluding the uncoated portion,
the first electrode comprises at least one insulation layer that simultaneously covers at least a portion of the uncoated portion and at least a portion of the coated portion.

Item 2. The electrode assembly of item 1, wherein the insulation layer is included on both surfaces of the first electrode.

Item 3. The electrode assembly of item 1, wherein the uncoated portion of the first electrode has a structure in which at least a portion of the uncoated portion is bent along a radial direction of the electrode assembly, and the insulation layer is provided only on a surface toward the bending direction among both surfaces of the first electrode.

Item 4. The electrode assembly of item 1, wherein one end of the insulation layer in a winding axis direction is located at a same height as one end of the separation film in the winding axis direction or located outside the one end of the separation film in the winding axis direction.

Item 5. The electrode assembly of item 1, wherein one end of the insulation layer in a winding axis direction is located at a same height as one end of the separation film in the winding axis direction.

Item 6. The electrode assembly of item 1, wherein the uncoated portion protrudes outward farther than the insulation layer.

Item 7. The electrode assembly of item 1, wherein the coated portion does not protrude in the winding axis direction farther than the separation film.

Item 8. The electrode assembly of item 1, wherein the first electrode is a positive electrode.

Item 9. The electrode assembly of item 1, wherein one end of the second electrode that faces the insulation layer with the separation film interposed between the second electrode and the insulation layer does not protrude outwards farther than one end of the separation film.

Item 10. The electrode assembly of item 1, wherein the coated portion comprises a sliding portion of which the active material layer has a reduced thickness, compared with a center region of the coated portion.

Item 11. The electrode assembly of item 10, wherein the sliding portion is formed in a boundary area between the coated portion and the uncoated portion.

Item 12. The electrode assembly of item 9, wherein the sliding portion is included in each of one end of the first electrode and the other end of the second electrode.

Item 13. The electrode assembly of item 10, wherein the sliding portion of the coated portion included in the first electrode and the sliding portion of the coated portion included in the second electrode are included in opposite directions to each other.

Item 14. The electrode assembly of item 12, wherein the separation film protrudes outwards farther than the other end of the first electrode and one end of the second electrode.

Item 15. The electrode assembly of item 10, wherein the insulation layer covers at least a portion of the sliding portion.

Item 16. The electrode assembly of item 1, wherein the insulation layer covers the uncoated portion by 0.3 mm to 5 mm.

Item 17. The electrode assembly of item 1, wherein the insulation layer covers the uncoated portion by 1.5 mm to 3 mm.

Item 18. The electrode assembly of item 1, wherein the insulation layer covers the coated portion by 0.1 mm to 3 mm.

Item 19. The electrode assembly of item 1, wherein the insulation layer covers the coated portion by 0.2 mm to 0.5 mm.

Item 20. The electrode assembly of item 1, wherein at least a portion of the uncoated portion is split into a plurality of segments.

Item 21. The electrode assembly of item 20, wherein the plurality of segments are bent in a radial direction of the electrode assembly.

Item 22. The electrode assembly of item 21, wherein the insulation layer extends to an end of the uncoated portion, on a surface toward the bending direction among both surfaces of the uncoated portion.

Item 23. The electrode assembly of item 22, wherein the insulation layer surrounds the end of the uncoated portion.

Item 24. The electrode assembly of item 22, wherein the insulation layer extends up to a bending point of the uncoated portion, on a surface opposite to the surface facing the bending direction among both surfaces of the uncoated portion.

Item 25. The electrode assembly of item 21, wherein the insulation layer does not extend to an end of the uncoated portion on a surface facing the bending direction among both surfaces of the uncoated portion.

Item 26. The electrode assembly of item 21, wherein the segments are provided only in a partial region on one surface of the electrode assembly in a height direction.

Item 27. The electrode assembly of item 26, wherein an area of a region where the segments are formed on one surface of the electrode assembly in the height direction is greater than an area of a region where the segments are not formed.

Item 28. The electrode assembly of item 26, wherein a plurality of segments adjacent to each other in a radial direction of the electrode assembly overlap each other along the radial direction of the electrode assembly, and
the insulation layer provided on one surface positioned in a bending direction of the uncoated portion among both surfaces of the uncoated portion has a shape extending to an end of the uncoated portion in a region where the segments are formed and has a shape that does not extend to the end of the uncoated portion in a region where the segments are not formed.

Item 29. The electrode assembly of item 1, wherein the uncoated portion included in the first electrode and the uncoated portion included in the second electrode protrude in opposite directions to each other.

Item 30. The electrode assembly of item 1, wherein a length of the coated portion included in the first electrode in a winding axis direction is less than a length of the coated portion included in the second electrode in the winding axis direction.

Item 31. The electrode assembly of item 1, wherein the coated portion included in the first electrode is located inside of the coated portion included in the second electrode in the winding axis direction.

Item 32. The electrode assembly of item 1, wherein the insulation layer is an insulating coating layer or insulation tape included on a boundary area between the uncoated portion and the coated portion.

Item 33. The electrode assembly of item 1, wherein the insulation layer includes an oil-based SBR binder and alumina oxide.

Item 34. A cylindrical secondary battery comprising:
the electrode assembly according to one of items 1 through 33;
a battery can accommodating the electrode assembly and electrically connected to the second electrode;
an sealing body sealing an open end of the battery can; and
a terminal electrically connected to the first electrode and having a surface exposed to the outside of the battery can.

Item 35. The cylindrical secondary battery of item 34, further comprising a first current collector plate electrically coupled to the uncoated portion included in the first electrode.

Item 36. The cylindrical secondary battery of item 35, wherein the uncoated portion is electrically coupled to the first current collector plate in a region not covered with the insulation layer among the entire region of the uncoated portion.

Item 37. The cylindrical secondary battery of item 36, wherein the uncoated portion is coupled to the first current collector plate by welding in the region not covered with the insulation layer among the entire region of the uncoated portion.

Item 38. A battery pack including the cylindrical secondary according to item 34.

Item 39. A vehicle including the battery pack of item 38.

## Claims

1. An electrode assembly (10) having a structure in which a first electrode (11), a second electrode (12) and a separation film (13) interposed between the first electrode (11) and the second electrode (12) are wound in one direction, comprises:
an insulation layer (14) covering at least a portion of the first electrode (11),
wherein an uncoated portion (11a) included in the first electrode (11) and the uncoated portion (12a) included in the second electrode (12) protrude in opposite directions to each other,
the uncoated portion (11a) of the first electrode (11) has a structure in which at least a portion of the uncoated portion (11a) is bent along a radial direction of the electrode assembly (10), and
the insulation layer (14) is provided on a surface toward the bending direction among both surfaces of the first electrode (11).

2. The electrode assembly (10) of claim 1, wherein the insulation layer (14) extends up to a bending point of the uncoated portion (11a).

3. The electrode assembly (10) of claim 1, wherein the insulation layer (14) is further provided on a surface opposite to the surface toward the bending direction.

4. The electrode assembly (10) of claim 3, wherein the insulation layer (14) provided on the surface toward the bending direction extends to an end of the uncoated portion (11a), and the insulation layer (14) provided on the surface opposite to the surface toward the bending direction extends up to a bending point of the uncoated portion (11a).

5. The electrode assembly (10) of claim 1, wherein on a surface of the electrode assembly (10) in the height direction, a portion of the uncoated portion (11a) is cut and removed.

6. The electrode assembly (10) of claim 1, wherein the insulation layer (14) is an insulation coating layer.

7. A cylindrical secondary battery (1) comprising:
the electrode assembly (10) according to one of claims 1 through 6; and
a battery can (20) accommodating the electrode assembly (10).

8. A battery pack (3) including the cylindrical secondary battery (1) according to claim 7.

9. A vehicle (5) including the battery pack (3) of claim 8.
